# EUROPEAN PATENT APPLICATION

(11) **EP 3 222 763 A1**
(43) Date of publication of application: **27.09.2017**
(21) Application number: 16161386.4
(22) Date of filing: 21.03.2016
(51) Int. Cl.: D03D 15/00, D01G 11/00

(54) **DENIM FABRIC MADE OF 100% RECYCLED YARN**

(71) Applicant: Bossa Ticaret Ve Sanayi Isletmeleri Turk Anonim Sirketi, 01310 Adana (TR)
(72) Inventor: DURU, Onur, ADANA (TR)
(74) Representative: Dereligil, Ersin

(57) **Abstract**

Invention relates to denim fabrics and yarns used for obtaining these fabrics in textile industry. Invention particularly relates to denim fabrics made of 100% recycled cotton-polyester blended yarn.

## Description

### Technical Field

Invention relates to denim fabrics and yarns used for obtaining these fabrics in textile industry. Invention particularly relates to denim fabrics made of 100% recycled cotton-polyester blended yarn.

### Background of the Invention

Denim fabrics are generally made of yarns such as cotton, polyester, nylon, viscose and lycra. Mentioned fabrics may have various unit weights. In general, warp yarn is blue indigo dyed and weft yarn is in un-dyed (raw) form. They may be woven in various patterns. They are widely used in all garments from sportswear to business attire because of their durability. Usually, denim fabrics that are manufactured from 100% cotton single yarn are preferred.

The desired minimum fiber length in the manufacture of cotton yarn is 26-28 mm. Using shorter fibers results in strength and evenness problems in the yarn. Therefore, recycled cotton yarn with a fiber length of 23-25 mm cannot be used in the production of denim fabric.

Yarn manufacturing machines designed for producing standard carded yarn are not suitable for working with recycled fiber. The need to make production with these machines using recycled fiber constitutes significant difficulties for application. Making production with existing yarn manufacturing machines using recycled fiber by making special adjustments and providing special operating conditions poses possible quality problems. It is especially likely to face quality problems during the stages of parallelizing the fibers and yarn formation by spinning (in carding machine, draw-frame, roving frame and ring spinning machines) particularly in productions made using the ring spinning technology.

Because recycled fibers have a short fiber length in general, these fibers are more suitable for working with open-end yarn manufacturing technology. However, this condition brings some restrictions in terms of fashionable product design, diversity and quality standards.

In the state of the art, 100% recycled yarns are used in carpets, rugs, mats, rags and such products, where yarn quality is not a priority.

Known advancements in the state of the art related to the subject are given below.

Patent with publication number TR 2011 02379 relates to "a recycling process that contains production of a garment by obtaining yarn and fabric from wastes of garment such as denim and gabardine". The invention consists of a recycling process that contains production of a garment after obtaining yarn and fabric from wastes of high-quality fabrics such as denim and gabardine. The mentioned process contains the process steps of producing recycled yarn (10) and manufacturing recycled fabric (20) by using the mentioned yarn.

In conclusion, the existence of the problems mentioned above and insufficiency of the existing solutions about the matter have necessitated making an improvement on the related technical field.

### Brief Description of the Invention

Present invention relates to denim fabric made of 100% recycled yarn that fulfills the abovementioned needs, eliminates all disadvantages and provides some additional advantages.

Primary object of the invention is to enable obtaining denim fabric made of 100% recycled yarn.

An object of the invention is to use 100% recycled yarns in products, whose yarn quality matters, such as denims.

Another object of the invention is to obtain denim fabric from yarns obtained from denim and polyester wastes.

Another object of the invention is to enable utilization of wastes from denim fabric production.

### Detailed Description of the Invention

In this detailed description, denim fabric of the invention made of 100% recycled yarn and its preferred embodiments are described only for the better understanding of the subject and should not be construed as a limitation.

The invention relates to denim fabric made of 100% recycled yarn. %100 recycled yarn obtained from recycled cotton fiber-recycled polyester fiber blend is used for the production of the mentioned denim fabric.

Denim fabric production method contains the process steps of;
- Obtaining recycled cotton and polyester fibers,
- homogenously blending recycled cotton and polyester fibers in the ratio of 70% recycled cotton and 30% recycled polyester,
- forming it into pressed bale in the press machine and/or obtaining carding sliver in carding machines,
- Obtaining draw frame slivers in the draw frame,
- forming them into yarns in the open-end machine or ring-spinning machine,
- weaving the denim fabric by using obtained 100% recycled yarn in the weft and warp yarn in weaving machines.

Recycled cotton and polyester fibers are obtained from plant wastes (wastes from denim production) and PET bottle wastes. These recycled cotton and polyester fibers, that are obtained, are fed into a weigh-pan blending machine as different components in order to obtain a homogenous fiber blend with desired blend ratios. Blend ratio indicates the amount of fiber types used in 100% recycled yarn. This ratio has a determining role in yarn quality. It is important in terms of being able to use the manufactured recycled yarn in denim fabrics.

Cotton and polyester fibers are weighed in predetermined amounts (preferably 70% recycled cotton + 30% recycled polyester) by means of the scales in the weigh-pan blending machine. Weighed fibers are discharged onto each other so as to form a blend on the conveyor of the weigh-pan blending machine. This obtained blend is transferred to the mixer area after passing through the feed roller. Homogenous blend is formed in the mixer area. Blend passing through the opening machine is formed into a pressed bale in the press machine or fed into carding machines automatically considering the production status (according to whether the fiber will be stored or not). Carding sliver is obtained by performing carding process on 100% recycled homogenous blend obtained from recycled cotton and recycled polyester in carding machines. Fiber blend that was formed into a bale is stored in storage areas. According to the production status, a desired amount of bales is fed into the plucker and transferred to doffers. In the carding process, the most suitable carding process for recycled fiber is performed by making the proper spacing settings between the feed roller and take off roller in the carder. Slivers from the carding process are treated by providing special operating conditions during the draw-frame process. Recycled fiber is prevented from getting harmed by means of making the suitable spacing settings between the feed roller and take off roller in the draw-frame process. These performed operations have an influence on the use of recycled fiber in other processes and on determining yarn quality. Resultant draw-frame slivers are transferred to the open-end machine or to the roving frame to be used in the ring-spinning machine depending on the structure of the desired product. Necessary settings are done in ring spinning and open-end machines so as to obtain 100% recycled yarn. Yarns with a structure suitable to be used in denim fabric are produced from recycled fiber by means of applying the suitable apron, clip and ring travelers in the ring-spinning machine and using the suitable rotor and nozzle in the open-end machine. Obtained 100% recycled yarn is used in denim fabric production both as the warp yarn and weft yarn.

Recycled cotton with 23-25 mm long fibers cannot be used solely in denim fabric production due to its low strength. However, this strength problem is eliminated by using recycled polyester. Homogenously blending recycled cotton and recycled polyester in different ratios by using state of the art weigh-pan blending machine partially eliminates the disadvantages of fibers with short staple length. Thus, yarn and fabric production using 100% recycled fiber is enabled.

State of the art 100% recycled yarns are used in carpets, rugs, mats, rags and such products, where yarn quality is not a priority. They cannot be used in fabrics such as denim, whose yarn quality matters. Within the scope of the invention, however, yarns made of 70% recycled cotton + 30% recycled polyester blend are used in denim fabric production. Main purpose of determining this blend ratio is to obtain high quality yarns and to enable the produced yarn to show the desired performance in the following processes.

Weigh-pan blending machine enables sensitively adjusting the ratio of components in the blend during production, when yarn quality is a priority. If the same ratio cannot be provided in every part of the yarn, then various quality issues are observed in the yarn. Weigh-pan blending machine provides a contribution for the use of 100% recycled yarns in denim fabric production.

Enabling the reuse of cotton and polyester by recycling provides a significantly important advantage in terms of environmental factors. Furthermore, enabling the use of cotton wastes (beige cotton waste and colored cotton wastes) from the plant by applying opening process has a positive contribution to the plant in terms of costs. Recycled cotton obtained from dyed and raw cotton waste is blended with recycled polyester in order to produce yarn. In a blend that is made this way, yarn with a color close to indigo can be manufactured. Since wastes of indigo dyed yarn are also used in recycled yarn, dyestuff is either not used at all or used in lesser amounts in fabrics made from this yarn. Therefore dyestuff, chemicals and also water are saved. Because recycled yarns that are made of only cotton cannot possess the desired strength, recycled polyester is also added to the blend.

For the use of 100% recycled yarns in denim fabric production, ideal blend components and ratio in recycled yarn production are determined as a different aspect compared to standard production. Fibers that will be used in denim fabric production are blended homogenously and sensitively in the weigh-pan blending machine. Suitable settings are made in all machines in order to obtain yarn with high quality that can be used in denim fabric. In carders, taker-in (licker in) roller speed is set to 950 rpm, drum speeds to 450 rpm and top flats speed to 150 mm/min. In draw frames, spacing between the front and middle roller is set to 43 mm and the spacing between the back and middle roller to 54 mm. Delivery speed of the draw frame is set to 450 m/min. If production will be made in the ring-spinning machine, roving process is performed with 900 rpm speed. Ring-spinning machine works with 8000 rpm speed. If production will be made using open-end machine, spinning cans from the draw frame are delivered to open-end machine. Open-end yarn manufacturing does not include roving process. Open-end machine works with 70000 rpm.

Which recycled fiber will be used in which ratio is an important factor for 100% recycled yarns used in denim fabric manufacturing. Fibers with different properties (fiber length, fineness, strength etc.) used in the blend should be balanced. Weigh-pan blending machine is used in order to blend the fiber to be used in a sensitive manner. If these are not performed smoothly, then obtained fiber blend cannot be used in cotton yarn manufacturing machines. Factors affecting whether to use the fiber or not include fiber length as well as other properties such as strength and uniformity.

Present invention also provides positive contributions regarding the amount of solid waste from the textile industry that is rapidly changing in our country and in the world in recent years and regarding the suitability of these wastes for recycling. Recycling and using textile wastes is an already applied method. However, denim and plastic wastes cannot be used in denim fabric production after being recycled. In fabrics produced from recycled fibers, wastes from standard production processes can be reused. Thus, the amount of waste from production is decreased. Moreover, lesser dyestuff is used in products manufactured from this fiber and consequently less chemical waste is generated. Raw material use is decreased and therefore raw material costs are reduced. Furthermore the invention provides a significant contribution to sustainability by reusing wastes, enabling the use of less dyestuff and generating less chemical waste by means of recycling.

## Claims

1. Denim fabric made of 100% recycled yarn.

2. Denim fabric according to claim 1, wherein the mentioned 100% recycled yarn is a blend of cotton and polyester.

3. Denim fabric according to claim 1, wherein warp and weft yarns are 100% recycled yarn.

4. Denim fabric according to any one of claims 2 or 3, wherein the mentioned 100% recycled yarn is a blend of 70% recycled cotton and 30 % recycled polyester.

5. Method for obtaining denim fabric according to claim 1, wherein it contains the process steps of;
• Obtaining recycled cotton and polyester fibers,
• homogenously blending recycled cotton and polyester fibers in the ratio of 70% recycled cotton and 30% recycled polyester,
• forming it into pressed bale in the press machine and/or obtaining carding sliver in carding machines,
• Obtaining draw frame slivers in the draw frame,
• forming them into yarns in the open-end machine or ring-spinning machine,
• weaving the denim fabric by using obtained 100% recycled yarn in the weft and warp yarn in weaving machines.
